# FASCICULE DE BREVET EUROPEEN

(11) **EP 0 722 958 B1**
(45) Date de publication et mention de la délivrance du brevet: **25.03.1998**
(21) Numéro de dépôt: 96400048.3
(22) Date de dépôt: 09.01.1996
(51) Int. Cl.: C08F 20/12

(54) **Procédé de préparation de polymères de (méth)acrylates d'alkyle par polymérisation anionique**
Verfahren zur Herstellung von Polymeren von Alkyl(meth)acrylate durch anionische Polymerisation
Process for preparing polymers of alkyl (meth)acrylates by anionic polymerisation

(30) Priorité: 20.01.1995 FR 9500639
(43) Date de publication de la demande: 24.07.1996
(73) Titulaire: ELF ATOCHEM S.A., 92800 Puteaux, Hauts de Seine (FR)
(72) Inventeur: Vuillemin, Bruno, F-64000 Pau (FR); Teyssie, Philippe, B-4121 Neuville en Condroz (BE); Wang, Jin-shan, Naperville, IL 60563 (US)
(74) Mandataire: Luziau, Nelly

(56) Documents cités:
- EP-A- 0 402 219
- EP-A- 0 524 054

## Description

L'invention est relative à la polymérisation anionique de monomères (méth)acrylate d'alkyle, particulièrement par un procédé peu coûteux et utilisable dans des conditions industrielles.

On a essayé de préparer des poly(méth)acrylates d'alkyle, et tout particulièrement du polyméthacrylate de méthyle, par polymérisation anionique en présence d'un amorceur du type alkyl-métal alcalin ou alcoolate de métal alcalin. Mais, la polymérisation des (méth)acrylates d'alkyle est généralement rendue difficile par suite de réactions secondaires dues à l'attaque préférentielle, par les anions, des groupes esters ou de l'atome d'hydrogène en position alpha des acrylates.

On a essayé de résoudre ces problèmes, en utilisant un système d'amorçage comprenant, comme décrit dans EP-A-185641, un composé organique de métal alcalin, tel que le butyllithium, comme amorceur et un sel minéral de métal alcalin tel que le chlorure de lithium. Par ce procédé, on peut préparer des polymères d'acrylate d'alkyle tertiaire, des polymères de méthacrylate de méthyle ou des polymères biséquencés styrène/méthacrylate de méthyle ou acrylate d'alkyle tertiaire.

Ce procédé permet un meilleur contrôle de la polymérisation conduisant à des polymères de masse moléculaire plus élevée et de polymolécularité plus faible, mais qui nécessite des basses températures, de l'ordre de -78°C.

On a encore amélioré la faisabilité de la polymérisation des (méth)acrylates d'alkyle en utilisant, comme décrit dans EP-A-524054, un système d'amorçage comprenant toujours un amorceur par exemple, de type butyl-métal alcalin et un composé, nommé ligand, du type alcoxy alcoolate de métal alcalin.

Avec ces systèmes d'amorçage, on peut encore mieux contrôler la polymérisation des (métha)crylates d'alkyle.

Cependant, ce procédé nécessite toujours un système d'amorçage à deux composants, voir même à trois composants puisque, pour améliorer encore l'efficacité, on ajoute un composé comme du diphényléthylène au butyllithium, ce qui rend plus coûteux le procédé. En outre, la polymérisation a encore lieu à basse température.

Il a aussi été envisagé par M. T 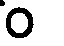 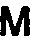 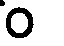 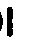 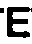 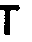 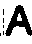 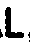 , dans Polymer Journal - Vol. 6 - n°5 - pages 438 à 444 (1974), de polymériser du méthacrylate de méthyle en présence d'un alkoxyde de métal alcalin. Cependant, cette polymérisation n'est possible que dans certains solvants et conduit alors à du polyméthacrylate de méthyle à faible pourcentage en triades syndiotactiques.

Du polyméthacrylate de méthyle à pourcentage élevé en triades syndiotactiques est intéressant car le polymère a, alors, une température de transition vitreuse plus élevée et, donc, une plus grande résistance à la chaleur.

La présente invention a donc pour objet un nouveau procédé de polymérisation de (méth)acrylates d'alkyle, pouvant être plus facilement industrialisable par le moyen d'un abaissement du coût et une augmentation de la température de la polymérisation.

L'invention a, en particulier, pour objet, un procédé permettant de préparer du polyméthacrylate de méthyle à pourcentage en triades syndiotactiques plus élevé, par exemple supérieur à 70 %.

Le procédé selon l'invention qui a pour objet de préparer des polymères de (méth)acrylates d'alkyle par polymérisation anionique en présence d'un amorceur à base de lithium, est caractérisé en ce qu'on polymérise le(s) monomère(s) de (méth)acrylates d'alkyle en présence, comme amorceur, d'un alcoolate de formule ROLi dans laquelle R a la formule R¹(OR²)ₘ dans laquelle R¹ est un radical alkyle linéaire ou ramifié ayant de 1 à 4 atomes de carbone, R² est un radical alkylène linéaire ou ramifié ayant de 2 à 4 atomes de carbone et m est le nombre entier 1, 2 ou 3, en milieu solvant dont le paramètre de solubilité, δ, est inférieur à 20.

Par méthacrylate d'alkyle, on entend des méthacrylates dans lesquels le groupe alkyle, le cas échéant substitué par exemple par au moins un atome d'halogène, contient de 1 à 18 atomes de carbone, comme les méthacrylates de méthyle, d'éthyle, de 2,2,2-trifluoroéthyle, de n-propyle, d'isopropyle, de n-butyle, de sec-butyle, de tert-butyle, de n-amyle, d'i-amyle, d'hexyle, d'éthyl-2-hexyle, de cyclohexyle, d'octyle, d'i-octyle, de décyle.

Par acrylates d'alkyle, on entend les acrylates d'alkyle primaire, secondaire ou tertiaire dont le groupe alkyle, le cas échéant substitué par exemple, par au moins un atome d'halogène, tel que chlore ou fluor, et/ou au moins un groupe hydroxyle, après protection de ce groupe hydroxyle, contient de 1 à 18 atomes de carbone, en mentionnant plus particulièrement, l'acrylate d'éthyle, l'acrylate de propyle, l'acrylate d'isopropyle, l'acrylate de butyle, l'acrylate d'isobutyle, l'acrylate de sec.butyle, l'acrylate d'hexyle, l'acrylate de tertiobutyle, l'acrylate d'éthyl-2-hexyle, l'acrylate de nonyle, l'acrylate de lauryle, l'acrylate de stéaryle, l'acrylate de cyclohexyle, l'acrylate d'isodécyle. On pourrait également mettre en oeuvre l'acrylate de phényle, l'acrylate de norbornyle, l'acrylate d'isobornyle et des l'acrylates d'alkylthioalkyle ou d'alcoxyalkyle, notamment des acrylates de méthoxy- et éthoxyéthyle, et également d'acrylonitrile et les dialkylacrylamides.

L'amorceur ROLi est un composé tel que décrit dans le document EP-A-524054. Dans ce document, il est utilisé comme ligand en association avec un amorceur du type butyl-métal alcalin.

Dans cette formule ROLi, comme indiqué précédemment, R représente le groupement R¹ (OR²) m. Le radical R¹ peut être un radical méthyle, éthyle, butyle, benzyle. R¹ est avantageusement le radical méthyle. R² peut être le radical éthylène, propylène, butylène, isopropylène. ll est, de préférence, le radical éthylène.

La polymérisation a lieu en milieu solvant dont, comme indiqué, le paramètre de solubilité, δ, est inférieur à 20. Comme exemples de tels solvants, on peut citer le tétrahydrofuranne, le diméthoxyéthane, le toluène, l'éthylbenzène.

La polymérisation peut avoir lieu à une température d'au moins -40°C peut même atteindre 60°C. Elle est de préférence de 0°C.

Une caractéristique importante de l'invention est que le composé utilisé comme amorceur doit être pratiquement pur, exempt de tout alcool résiduel.

Pour cela, on peut préparer l'amorceur ROLi pour tout procédé, du moment qu'il conduit à un produit pur. On peut citer, par exemple, les procédés A et B suivants :

### Préparation de méthoxy ethoxy éthoxylate de lithium (méthode A)

On ajoute 0,5 mole d'alcool MeOCH₂CH₂OCH₂CH₂OH à 500 ml cyclohexane. L'alcoolate est préparé par réaction de l'alcool avec 0,5 mole de BuLi en présence de quelques gouttes de diphényléthylène (DPE). Ce composé DPE agit comme indicateur coloré (réaction de BuLi + DPE), indiquant l'absence d'alcool.

### Préparation de méthoxy éthoxy éthoxylate de lithium (méthode B)

On obtient 0,5 mole de MeOCH₂CH₂OCH₂CH₂OLi par réaction de 0,5 mole de MeOCH₂CH₂OCH₂CH₂OH sur une mole de lithium métal dans 500 ml de THF.

La durée de réaction est de 12 heures, suivie de 6 heures à reflux. Le THF est éliminé par distillation. On ajoute la quantité voulue de cyclohexane pour amener la solution à la concentration voulue. La conversion est de 100 %.

La polymérisation, réalisée en présence de l'amorceur selon l'invention, a lieu de préférence en l'absence d'humidité et d'oxygène.

En fin de polymérisation, on peut obtenir des polymères de (méth)acrylate d'alkyle à partir du polymère vivant par désactivation de ce dernier par réaction avec une source de protons consistant, notamment en cas d'alcool ou un acide.

Les polymères obtenus, en particulier les polyméthacrylates de méthyle, ont des masses moléculaires comprises entre 10.000 et 2.000.000. Ils présentent une polymolécularité de 1,5 à 4. Ces valeurs correspondent à celles de polymères acryliques habituellement fabriqués et présentent de bonnes résistances mécaniques. Les polyméthacrylates de méthyle obtenus ont, en outre, un pourcentage de triades syndiotactiques d'au moins 70 %, ce qui leur confère une température de transition vitreuse d'au moins 120°C. Les exemples suivants illustrent l'invention.

Dans les exemples, on appelle les composés utilisés de la manière suivante :
MAM : méthacrylate de méthyle
LiOEM : CH₃OCH₂CH₂OLi
LiOE₂M : CH₃OCH₂CH₂OCH₂CH₂OLi
LIOE₂Bu : BuOCH₂CH₂OCH₂CH₂OLi
LIOE₃M : CH₃O(CH₂CH₂O)₂CH₂CH₂OLi

### Exemple 1 :

A 4 x 10 ⁻³ mole de méthoxy éthoxy éthoxylate de lithium (LiOE₂M) préparé selon la méthode A, on ajoute le méthacrylate de méthyle (MAM) en solution dans le toluène (solution à 10 %) ; après 1 heure de réaction à 0°C, on stoppe la réaction par addition de 5 x 10 ⁻³ mole de méthanol dans le toluène. On récupère le polymère par précipitation dans le méthanol, on le sèche à 80°C sous vide, on le pèse, puis on le caractérise en GPC et RMN. Le rendement est de 100 %.
Mn : 326.000
Polymolécularité (Ip) : 2,36

| | | |
|---|---|---|
| % triades : | syndiotactiques : | 77 |
| | hétérotactiques : | 22 |
| | isotactiques : | 1 |

### Exemple 2 :

On opère comme à l'exemple 1, mais on utilise 2 x 10⁻³ mole de LiOE₂M préparé selon la méthode A ; la durée de la polymérisation est de 30 minutes. On obtient le polymère avec un rendement de 90 %. Caractéristiques :
Mn : 246.000 -
Polymolécularité (Ip) : 2,20

| | | |
|---|---|---|
| % triades : | syndiotactiques : | 75 |
| | hétérotactiques : | 24 |
| | isotactiques : | 1 |

### Exemple 3 :

A 3,8 x 10⁻³ mole de LIOE₃M préparé selon la méthode A, on ajoute le MAM en solution à 35 % dans le toluène. Après 10 minutes de réaction à 0°C, on stoppe la réaction par addition de méthanol dans le toluène. Le polymère est récupéré par précipitation dans le méthanol, séché à 80°C sous vide, pesé et caractérisé en GPC et en RMN :
Mn : 104.000
Polymolécularité (Ip) : 2,03

| | | |
|---|---|---|
| % triades : | syndiotactiques : | 74 |
| | hétérotactiques : | 24 |
| | isotactiques : | 2 |

### Exemple 4 :

On opère comme à l'exemple 3, mais on utilise 4 x 10⁻³ mole de LIOE₂Bu préparé selon la méthode B. On obtient le polymère avec un rendement de 95 %. Caractérisation du polymère :
Mn : 78.600
Polymolécularité (Ip) : 2,79

| | | |
|---|---|---|
| % triades : | syndiotactiques : | 74 |
| | hétérotactiques : | 24 |
| | isotactiques : | 2 |

### Exemple 5 :

A 20 x 10⁻³ mole de LIOE₂Bu préparé selon la méthode B, on ajoute le MAM dans le toluène (solution à 10 %). La polymérisation dure 1 heure. On stoppe la réaction par addition de méthanol et on récupère le polymère, comme à l'exemple 3, avec un rendement de 100 %. Le polymère est caractérisé comme à l'exemple 1. Caractérisation du polymère.
Mn : 112.000
Polymolécularité (Ip) : 3,0

| | | |
|---|---|---|
| % triades : | syndiotactiques : | 75 |
| | hétérotactiques : | 24 |
| | isotactiques : | 1 |

### Exemple 6 :

A 5 x 10⁻³ mole de LIOE₃M préparé selon la méthode A, on ajoute le MAM. La polymérisation a lieu en masse pendant 1 minute. On stoppe la réaction par addition de méthanol dans le toluène. On récupère le polymère par précipitation dans le méthanol, on le sèche à 80°C sous vide, puis on le pèse et on le caractérise en GPC et en RMN :
Mn : 118.000
Polymolécularité (Ip) : 3,04

| | | |
|---|---|---|
| % triades : | syndiotactiques : | 75 |
| | hétérotactiques : | 23 |
| | isotactiques : | 2 |

### Exemple 7 :

On opère comme à l'exemple 3 mais on utilise 4 x 10⁻³ mole de LIOEM préparé selon la méthode B. On obtient le polymère avec un rendement de 94 %. Caractérisation du polymère:
Mn : 367.000
Polymolécularité (Ip) : 3,4

| | | |
|---|---|---|
| % triades : | syndiotactiques : | 73 |
| | hétérotactiques : | 23 |
| | isotactiques : | 4 |

### Exemple 8 :

On opère comme à l'exemple 1 mais on utilise 5 x 10⁻³ mole de LIOE₂M et on remplace de MAM par du méthacrylate de n-butyle en solution dans le toluène (solution à 10 %). Après 1 heure de réaction à 0°C, on stoppe la réaction par addition de 1 x 10⁻² mole de méthanol, on le sèche à 80°C sous vide, on le pèse, puis on le caractérise en GPC et RMN. Le rendement est de 100 %.
Mn : 222.000
Polymolécularité (Ip) : 2,56

### Exemple 9 :

On opère comme à l'exemple 8 mais on remplace le MAM par de l'acrylate de terbutyle en solution dans le toluène (solution à 10 %). Après 1 heure de réaction à 0°C, on stoppe la polymérisation par addition de 10⁻² mol de MeOH, on le sèche à 80°C sous vide, on le pèse puis on le caractérise en GPC et RMN. Le rendement est de 100 %.
Mn : 192.000
Polymolécularité (Ip) : 3,1

## Revendications

1. Procédé de préparation de polymères de (méth)acrylates d'alkyle, par polymérisation anionique en présence d'un amorceur à base lithium caractérisé en ce qu'on polymérise le(s) monomère(s) de (méth)acrylates d'alkyle en présence, comme amorceur, d'un alcoolate de formule ROLi dans laquelle R a la formule R¹(OR²)ₘ dans laquelle R¹ est un radical alkyle linéaire ou ramifié ayant de 1 à 4 atomes de carbone, R² est un radical alkylène linéaire ou ramifié ayant de 2 à 4 atomes de carbone et m est le nombre entier 1, 2 ou 3 et en milieu solvant dont le paramètre de solubilité, δ, est inférieur à 20.

2. Procédé conforme à la revendication 1, caractérisé en ce que le monomère est un méthacrylate d'alkyle dans lequel le groupe alkyle a de 1 à 18 atomes de carbone.

3. Procédé conforme à la revendication 2, caractérisé en ce que le méthacrylate d'alkyle est choisi parmi les méthacrylates de méthyle, d'éthyle, de 2,2,2-trifluoroéthyle, de n-propyle, d'isopropyle, de n-butyle, de sec-butyle, de tert-butyle, de n-amyle, d'i-amyle, d'hexyle, d'éthyl-2-hexyle, de cyclohexyle, d'octyle, d'ioctyle, de décyle.

4. Procédé conforme à la revendication 3, caractérisé en ce que le monomère est le méthacrylate de méthyle.

5. Procédé conforme à la revendication 1, caractérisé en ce que le monomère est un acrylate d'alkyle primaire, secondaire ou tertiaire dans lequel le groupe allkyle, substitué ou non par au moins un atome d'halogène ou un groupe hydroxyle, contient de 1 à 18 atomes de carbone.

6. Procédé conforme à la revendication 5, caractérisé en ce que l'acrylate d'alkyle est choisi parmi l'acrylate d'éthyle, l'acrylate de propyle, l'acrylate d'isopropyle, l'acrylate de butyle, l'acrylate d'isobutyle, l'acrylate d'hexyle, l'acrylate de tertiobutyle, l'acrylate d'éthyl-2-hexyle, l'acrylate de nonyle, l'acrylate de lauryle, l'acrylate de stéaryle, l'acrylate de cyclohexyle, l'acrylate d'isodécyle.

7. Procédé conforme à l'une des revendications 1 et 2, caractérisé en ce que dans la formule de l'amorceur, R¹ est un radical méthyle, éthyle, butyle, benzyle et R² est radical éthylène, propylène, butylène, isopropylène.

8. Procédé conforme à l'une des revendications 1 à 7, caractérisé en ce que le solvant est choisi parmi le tétrahydrofuranne, le diméthoxyéthane et le toluène.

9. Procédé conforme à l'une des revendications 1 à 8, caractérisé en ce que la polymérisation a lieu à une température comprise entre - 40°C et + 60°C.

## Claims

1. Process for the preparation of alkyl (meth)acrylate polymers by anionic polymerization in the presence of a lithium-based initiator, characterized in that the alkyl (meth)acrylate monomer(s) is/are polymerized in the presence, as initiator, of an alkoxide of formula ROLi, in which R has the formula R¹(OR²)ₘ in which R¹ is a linear or branched alkyl radical having from 1 to 4 carbon atoms, R² is a linear or branched alkylene radical having from 2 to 4 carbon atoms and m is the integer 1, 2 or 3, in solvent medium in which the solubility parameter, δ, is less than 20.

2. Process in accordance with Claim 1, characterized in that the monomer is an alkyl methacrylate in which the alkyl group has from 1 to 18 carbon atoms.

3. Process in accordance with Claim 2, characterized in that the alkyl methacrylate is chosen from methyl, ethyl, 2,2,2-trifluoroethyl, n-propyl, isopropyl, n-butyl, sec-butyl, tert-butyl, n-amyl, i-amyl, hexyl, 2-ethylhexyl, cyclohexyl, octyl, i-octyl and decyl methacrylates.

4. Process in accordance with Claim 3, characterized in that the monomer is methyl methacrylate.

5. Process in accordance with Claim 1, characterized in that the monomer is a primary, secondary or tertiary alkyl acrylate in which the alkyl group, which may or may not be substituted by at least one halogen atom or one hydroxyl group, contains from 1 to 18 carbon atoms.

6. Process in accordance with Claim 5, characterized in that the alkyl acrylate is chosen from ethyl acrylate, propyl acrylate, isopropyl acrylate, butyl acrylate, isobutyl acrylate, hexyl acrylate, tert-butyl acrylate, 2-ethylhexyl acrylate, nonyl acrylate, lauryl acrylate, stearyl acrylate, cyclohexyl acrylate or isodecyl acrylate.

7. Process in accordance with either of Claims 1 and 2, characterized in that, in the formula of the initiator, R¹ is a methyl, ethyl, butyl or benzyl radical and R² is the ethylene, propylene, butylene or isopropylene radical.

8. Process in accordance with one of Claims 1 to 7, characterized in that the solvent is chosen from tetrahydrofuran, dimethoxyethane and toluene.

9. Process in accordance with one of Claims 1 to 8, characterized in that the polymerization takes place at a temperature of between -40°C and +60°C.

## Patentansprüche

1. Verfahren zur Herstellung von Alkyl(meth-)acrylatpolymeren durch anionische Polymerisation in Gegenwart eines Starters auf Lithiumbasis, dadurch gekennzeichnet, daß man das oder die Alkyl(meth-)acrylatmonomere in Gegenwart eines Alkoholates der Formel ROLi als Starter, wobei R der Formel R¹(OR²)ₘ entspricht, in der R¹ ein linearer oder verzweigter Alkylrest mit 1 bis 4 Kohlenstoffatomen ist, R² ein linearer oder verzweigter Alkylenrest mit 2 bis 4 Kohlenstoffatomen ist und m eine ganze Zahl 1, 2 oder 3 ist, und in einem Lösungsmittelmilieu polymerisiert, dessen Löslichkeitsparameter δ Kleiner als 20 ist.

2. Verfahren nach Anspruch 1, dadurch gekennzeichnet, daß das Monomer ein Alkylmethacrylat ist, bei dem die Alkylgruppe 1 bis 18 Kohlenstoffatome aufweist.

3. Verfahren nach Anspruch 2, dadurch gekennzeichnet, daß das Alkylmeth1acrylat ausgewählt ist aus Methyl-, Ethyl-, 2,2,2-Trifluorethyl-, n-Propyl-, iso-Propyl-, n-Butyl-, sek.-Butyl-, tert.-Butyl-, n-Amyl-, iso-Amyl-, Hexyl-, 2-Ethylhexyl-, Cyclohexyl-, Octyl-, iso-Octyl- und Decylmethacrylat.

4. Verfahren nach Anspruch 3, dadurch gekennzeichnet, daß das Monomer Methylmethacrylat ist.

5. Verfahren nach Anspruch 1, dadurch gekennzeichnet, daß das Monomer ein primäres, sekundäres oder tertiäres Alkylacrylat ist, bei dem die gegebenenfalls mit mindestens einem Halogenatom oder einer Hydroxylgruppe substituierte Alkylgruppe 1 bis 18 Kohlenstoffatome enthält.

6. Verfahren nach Anspruch 5, dadurch gekennzeichnet, daß das Alkylacrylat ausgewählt ist aus Ethylacrylat, Propylacrylat, iso-Propylacrylat, Butylacrylat, iso-Butylacrylat, Hexylacrylat, Tertiobutylacrylat, 2-Ethylhexylacrylat, Nonylacrylat, Laurylacrylat, Stearylacrylat, Cyclohexylacrylat und iso-Decylacrylat.

7. Verfahren nach Anspruch 1 oder 2, dadurch gekennzeichnet, daß in der Formel des Starters R¹ ein Methyl-, Ethyl-, Butyl- oder Benzylrest und R² ein Ethylen-, Propylen-, Butylen- oder Isopropylenrest ist.

8. Verfahren nach einem der Ansprüche 1 bis 7, dadurch gekennzeichnet, daß das Lösungsmittel aus Tetrahydrofuran, Dimethoxyethan und Toluol ausgewählt ist.

9. Verfahren nach einem der Ansprüche 1 bis 8, dadurch gekennzeichnet, daß die Polymerisation bei einer Temperatur von -40 °C bis +60 °C durchgeführt wird.
